# EUROPEAN PATENT APPLICATION

(11) **EP 4 778 962 A1**
(43) Date of publication of application: **22.07.2026**
(21) Application number: 24882793.3
(22) Date of filing: 23.10.2024
(51) Int. Cl.: C08J 5/22, B01D 67/00, B01D 71/26, B01D 71/36, H01M 8/1053, H01M 8/103, H01M 8/1062, H01M 8/1067

(54) **ANION EXCHANGE MEMBRANE AND MANUFACTURING METHOD THEREOF**

(30) Priority: 25.10.2023 KR 20230144082
(71) Applicant: Hanwha Solutions Corporation, Jung-gu Seoul 04541 (KR)
(72) Inventor: LEE, Ki Sub, Daejeon 34128 (KR); KIM, Yong Min, Daejeon 34128 (KR); LEE, Su Bin, Daejeon 34128 (KR); KU, Il Hwae, Daejeon 34128 (KR); CHO, Yoon Hwan, Daejeon 34128 (KR)
(74) Representative: Berggren Oy
(86) International application number: PCT/KR2024/016127
(87) International publication number: WO 2025/089766

(57) **Abstract**

According to one embodiment of the present invention, an anion exchange membrane comprising a carbazole-based polymer but having mitigated cracking characteristics of the polymer, and a method for manufacturing the same can be provided.

## Description

### [TECHNICAL FIELD]

### Cross-reference to Related Application

The present application is based on, and claims priority from, Korean Patent Application No. 10-2023-0144082 filed on October 25, 2023, the disclosure of which is hereby incorporated by reference herein in its entirety.

The present invention relates to an anion exchange membrane and a method for manufacturing the same. Specifically, the present invention relates to an anion exchange membrane comprising a carbazole-based polymer and a method for manufacturing the same.

### [BACKGROUND ART]

Importance is being highlighted for technology that can eco-friendly produce and utilize hydrogen, which is a next-generation energy source that can solve fossil fuel depletion and environmental pollution.

An anion exchange membrane fuel cell and a membrane electrode assembly (MEA) for water electrolysis have a structure in which an anode electrode and a cathode electrode are laminated around an anion exchange membrane.

Specifically, the MEA for water electrolysis includes an anion exchange membrane, an anode electrode formed on one side of the anion exchange membrane, and a cathode electrode formed on the other side of the anion exchange membrane. A porous transport layer (PTL) and a separator are laminated at both ends of the MEA to form a unit stack, and a plurality of unit cells form a water electrolysis stack, and water is decomposed at the cathode electrode to generate hydrogen and hydroxide ions, and oxygen is generated from hydroxide ions at the anode electrode. Each reaction occurs at a catalyst of a catalyst layer (CL). At this time, the anion exchange membrane (AEM) plays a role in moving OH- ions generated at the cathode to the anode electrode and preventing movement of oxygen and hydrogen gas.

In particular, according to the hydrogen economy activation roadmap recently announced by the Ministry of Trade, Industry and Energy of Korea, since a significant portion of hydrogen production is scheduled to be performed by an eco-friendly method, development of water electrolysis, which is a representative technology for eco-friendly hydrogen production, is even more urgently required.

In this regard, research on water electrolysis technology using an electrolysis method is being actively conducted, and thus, as water electrolysis technologies, proton exchange membrane water electrolysis (PEMWE), alkaline water electrolysis (AWE), and anion exchange membrane water electrolysis (AEMWE) are known.

Among them, anion exchange membrane water electrolysis is a water electrolysis system that can overcome disadvantages while utilizing advantages of existing proton exchange membrane water electrolysis and alkaline water electrolysis.

A carbazole-based polymer intended to be used as an anion exchange material of this anion exchange membrane water electrolysis is suitable as an anion exchange material because of excellent alkali resistance and high conductivity, but there is a difficulty in actual use due to cracking and brittle characteristics of the polymer. In particular, since high-temperature and high-pressure conditions are repeated in a process for manufacturing a membrane electrode assembly, there is a problem that an anion exchange membrane comprising a carbazole-based polymer cracks or breaks in the process.

### [DETAILED DESCRIPTION OF THE INVENTION]

### [TECHNICAL PROBLEM]

Accordingly, there is provided an anion exchange membrane comprising a carbazole-based polymer but having mitigated cracking characteristics of the polymer, and a method for manufacturing the same.

### [TECHNICAL SOLUTION]

An anion exchange membrane according to one embodiment of the present invention comprises a first carbazole-based polymer layer; a porous support layer; and a second carbazole-based polymer layer, wherein the porous support layer is provided between the first carbazole-based polymer layer and the second carbazole-based polymer layer, and a total thickness of the first carbazole-based polymer layer, the porous support layer, and the second carbazole-based polymer layer may be greater than 40 µm and less than 150 µm.

The method may comprise: coating a first carbazole-based polymer composition onto a release sheet (Step 1); placing a porous support on the layer of the first carbazole-based polymer composition to obtain a first composite membrane (Step 2); drying the first composite membrane (Step 3); coating a second carbazole-based polymer composition onto the porous support of the dried first composite membrane to obtain a second composite membrane (Step 4); drying the second composite membrane (Step 5); and removing the release sheet (Step 6).

### [ADVANTAGEOUS EFFECTS]

According to one embodiment of the present invention, an anion exchange membrane comprising a carbazole-based polymer but having mitigated polymer cracking characteristics, and a method for manufacturing the same can be provided.

### [BRIEF DESCRIPTION OF THE DRAWINGS]

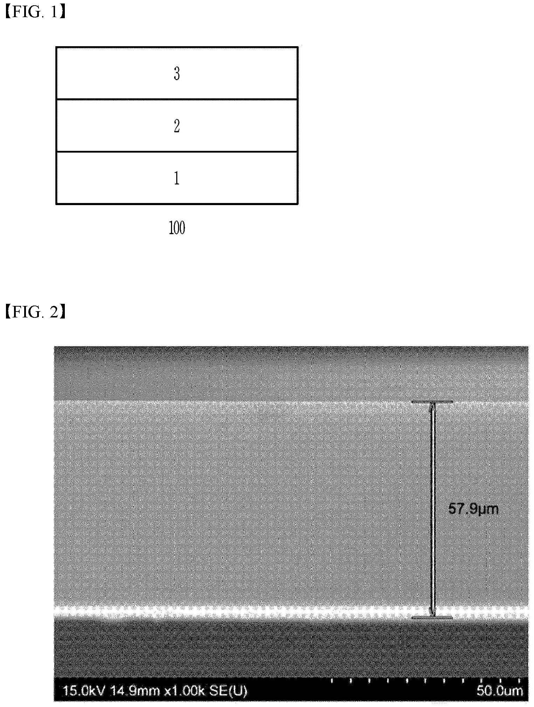

FIG. 1 is a schematic diagram of an anion exchange membrane according to one embodiment of the present invention.
FIG. 2 is a scanning electron microscope (SEM) image of a cross-section of a 58 µm thick single-layer membrane of a Comparative Example of the present invention.
FIG. 3 is a scanning electron microscope (SEM) of a cross-section of an 80.6 µm thick reinforced membrane of an Example taken with a Scanning Electron Microscope (SEM).
FIG. 4 is a photograph of a roll-type reinforced membrane manufactured according to the present invention.
FIG. 5 is a photograph confirming brittleness of an anion exchange membrane manufactured in Experimental example of the present invention.
FIG. 6 is a result of evaluating the performance of a water electrolysis system after manufacturing an MEA with a reinforced composite membrane manufactured according to the present invention.

### [DETAILED DESCRIPTION OF THE EMBODIMENTS]

As used herein, the terms "the first", "the second", and the like are used to describe a variety of components, and these terms are merely employed to differentiate a certain component from other components.

Further, the terms used in this description are just for explaining exemplary embodiments and it is not intended to restrict the present invention. The singular expression may include the plural expression unless it is differently expressed contextually. In the present description, the term "include", "equip", or "have" is only used for explaining characteristics taken effect, numbers, steps, components, or combinations thereof, and do not exclude the existence or the possibility of addition of one or more different characteristics, numbers, steps, components or combinations thereof.

Further, in the present invention, when a layer or an element is mentioned to be formed "on" or "above" layers or elements, it means that each layer or element is directly formed on the layers or elements, or other layers or elements may be additionally formed between the layers, subjects, or substrates.

The present invention may be variously modified and have various forms, and specific embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the invention.

A carbazole-based polymer is suitable as an anion exchange membrane material due to its excellent alkali resistance and high conductivity. However, the carbazole-based polymer has a drawback that it is difficult to use as an anion exchange membrane because it has cracking characteristics. In particular, there is a problem that an anion exchange membrane comprising a carbazole-based polymer cracks or breaks while going through several steps of high-temperature conditions in a process for manufacturing a membrane electrode assembly.

Accordingly, the present inventors intend to provide an anion exchange membrane comprising a carbazole-based polymer but having improved cracking characteristics in order to utilize excellent anion exchange characteristics of the carbazole-based polymer.

Hereinafter, an anion exchange membrane comprising the carbazole-based polymer according to the present invention will be described in detail.

An anion exchange membrane (100) according to one embodiment of the present invention may comprise a first carbazole-based polymer layer (1); a porous support layer (2); and a second carbazole-based polymer layer (3). In addition, the porous support layer may be provided between the first carbazole-based polymer layer and the second carbazole-based polymer layer. That is, the anion exchange membrane of the present invention may be a composite membrane having a three-layer structure in which the carbazole-based polymer layer is coated on both sides of the porous support layer, with the porous support layer at the center.

The first carbazole-based polymer and the second carbazole-based polymer may each independently comprise a compound represented by Chemical Formula 1 below:

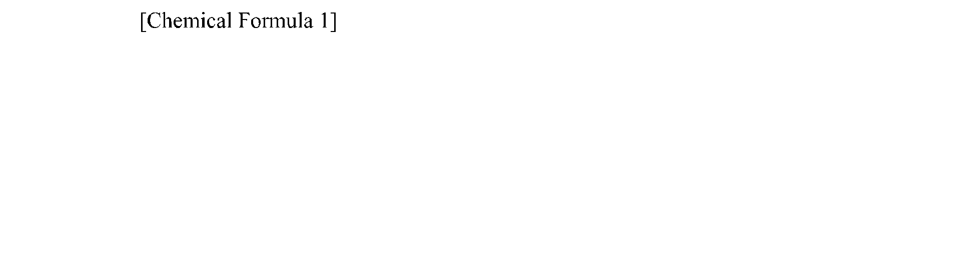

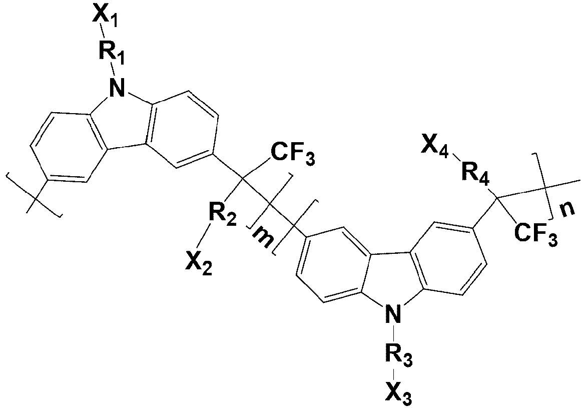

In Chemical Formula 1,
R₁ to R₄ are each independently C₁₋₆₀ alkylene; C₆₋₆₀ arylene; or C₂₋₆₀ allylene,
R₁ to R₄ may be each independently unsubstituted or substituted with one or more fluorines,
R₁ to R₄ may each independently comprise one or more heteroatoms selected from the group consisting of O, N, and S instead of carbon,
R₁ to R₄ may be the same or different for each repeating unit,
X₁ to X₄ may be each independently a hydrogen atom; or an anion exchange group,
one or more of X₁ to X₄ are an anion exchange group,
the anion exchange group is one or more selected from the group consisting of an amine group, an ammonium group, an amino group, an imine group, a sulfonium group, a phosphonium group, a pyridyl group, a carbazolyl group, an imidazolyl group, or salts thereof, and
m or n is each independently an integer of 1 to 100,000.

Specifically, the compound represented by Chemical Formula 1 may be poly(9-(6-(trimethylammonium bromide)hexyl)-9H-carbazole-co-1,1,1-trifluoroisopropane) represented by Chemical Formula 2 below.

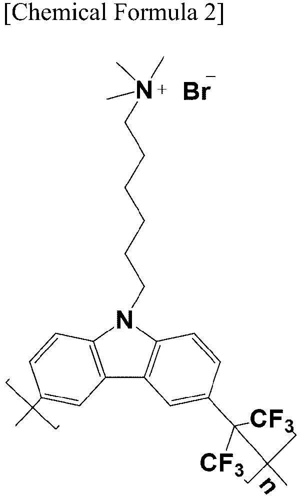

A carbazole-based polymer included in the first carbazole-based polymer layer and a carbazole-based polymer included in the second carbazole-based polymer layer may be the same or different. Specifically, the carbazole-based polymer included in the first carbazole-based polymer layer and the carbazole-based polymer included in the second carbazole-based polymer layer may be the same polymer.

The porous support may comprise one or more selected from the group consisting of polypropylene (PP), polyethylene (PE), and polytetrafluoroethylene (PTFE), each having excellent alkali resistance.

By using a porous material as the support, the carbazole-based polymer is partially impregnated into the porous support to facilitate OH- ion transport, and the first carbazole-based polymer layer and the second carbazole-based polymer layer are bound to the porous support, which can serve to prevent a breaking phenomenon of the carbazole-based polymer.

In the anion exchange membrane, a total thickness of the first carbazole-based polymer layer, the porous support layer, and the second carbazole-based polymer layer may be greater than 40 µm and 170 µm or less. Specifically, the anion exchange membrane may have a total thickness of greater than 40 µm, 60 µm or more, 70 µm or more, 80 µm or more, or 100 µm or more, and 170 µm or less, 150 µm or less, 140 µm or less, 130 µm or less, or 120 µm or less.

In an anion water electrolysis system, a range of hydrogen content relative to oxygen amount at the anode electrode is regulated in order to prevent in advance a problem due to explosion during operation of the system. The explosion range is designed such that there is a possibility of explosion when the hydrogen content relative to oxygen amount is 4% or more, and the system is stopped when it becomes 2% or more.

Accordingly, when the total thickness of the anion exchange membrane is 40 µm or less, hydrogen gas generated at the cathode electrode moves toward the anode electrode through the anion exchange membrane, and thus there is a high possibility that the hydrogen content relative to oxygen amount exceeds 2% and the system is not operated.

On the other hand, when the total thickness of the anion exchange membrane exceeds 170 µm, the carbazole-based polymer layer is thick and characteristics of the carbazole-based polymer become dominant, and thus the manufactured anion exchange membrane may crack or break due to the cracking characteristics of the carbazole-based polymer.

In addition, the first carbazole-based polymer layer may have a thickness of 5µm to 73µm. Specifically, the thickness may be 15µm to 70µm.

In addition, the porous support layer may have a thickness of 5µm to 50µm. Specifically, the thickness may be 5µm to 30µm.

In addition, the second carbazole-based polymer layer may have a thickness of 5µm to 73µm. Specifically, the thickness may be 15µm to 70µm.

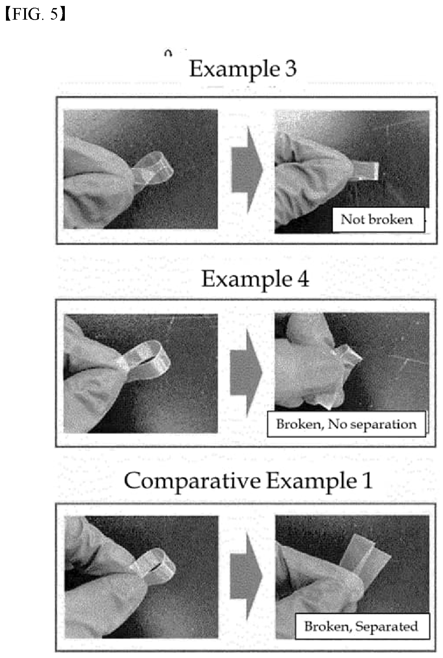

The anion exchange membrane in the form of a composite membrane of the present invention has improved cracking characteristics of the carbazole-based polymer and can be processed into a roll form (see FIG. 5).

A method for manufacturing an anion exchange membrane according to another embodiment of the present invention may comprise:
coating a first carbazole-based polymer composition onto a release sheet (Step 1); placing a porous support on the layer of the first carbazole-based polymer composition to obtain a first composite membrane (Step 2); drying the first composite membrane (Step 3); coating a second carbazole-based polymer composition onto the porous support of the dried first composite membrane to obtain a second composite membrane (Step 4); drying the second composite membrane (Step 5); and removing the release sheet (Step 6).

Step 1 is a step of coating the first carbazole-based polymer composition on the release sheet.

The first carbazole-based polymer composition may be a solution comprising a carbazole-based polymer. A solvent used in the solution is not limited as long as it is a polar solvent, but preferably may comprise a polar aprotic solvent. For example, it may comprise N-methyl-2-pyrrolidone (NMP).

In addition, the first carbazole-based polymer composition may comprise a compound represented by Chemical Formula 1 below.

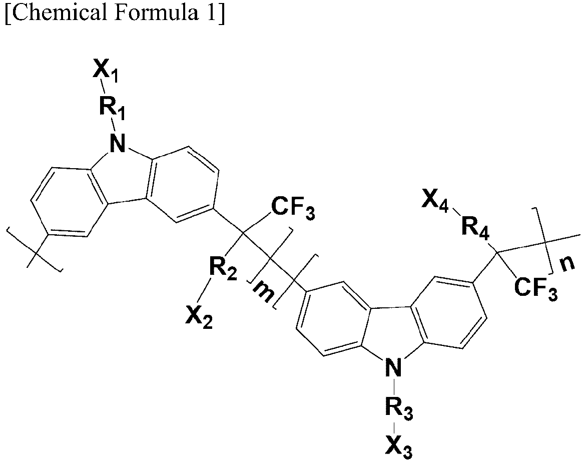

In Chemical Formula 1,
R₁ to R₄ are each independently C₁₋₆₀ alkylene; C₆₋₆₀ arylene; or C₂₋₆₀ allylene,
R₁ to R₄ may be each independently unsubstituted or substituted with one or more fluorines,
R₁ to R₄ may each independently comprise one or more heteroatoms selected from the group consisting of O, N, and S instead of carbon,
R₁ to R₄ may be the same or different for each repeating unit,
X₁ to X₄ may be each independently a hydrogen atom; or an anion exchange group,
one or more of X₁ to X₄ are an anion exchange group,
the anion exchange group is one or more selected from the group consisting of an amine group, an ammonium group, an amino group, an imine group, a sulfonium group, a phosphonium group, a pyridyl group, a carbazolyl group, an imidazolyl group, or salts thereof, and
m or n is each independently an integer of 1 to 100,000.

In addition, the release sheet is not limited as long as it can be used in the art, but for example, polyethylene terephthalate (PET), polyethylene naphthalate (PEN), or polyimide (PI) or the like may be used.

In addition, as a method of coating the first carbazole-based polymer composition, there is no limitation as long as it is a general polymer coating method, but for example, comma coating, slot-die coating, or gravure coating or the like may be used.

Specifically, the compound represented by Chemical Formula 1 may be poly(9-(6-(trimethylammonium bromide)hexyl)-9H-carbazole-co-1,1,1-trifluoroisopropane) represented by Chemical Formula 2 below.

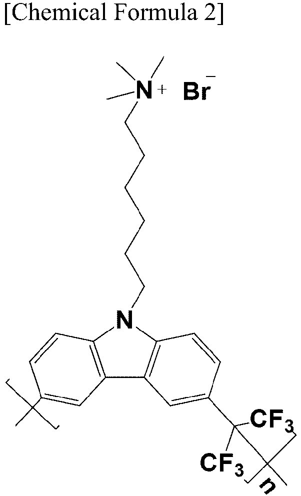

Step 2 is a step of obtaining a first composite membrane by positioning a porous support on the first carbazole-based polymer composition layer formed in Step 1.

That is, the first composite membrane may have a structure in which a release sheet, a carbazole-based polymer composition layer, and a porous support are sequentially laminated.

The porous support may comprise one or more selected from the group consisting of polypropylene (PP), polyethylene (PE), and polytetrafluoroethylene (PTFE), each having excellent alkali resistance.

By using a porous material as the support, the carbazole-based polymer is partially impregnated into the porous support to facilitate OH- ions transport, and the first carbazole-based polymer layer and the second carbazole-based polymer layer are bound to the porous support, which can serve to prevent a breaking phenomenon of the carbazole-based polymer.

Step 3 is a step of drying the first composite membrane of Step 2.

In Step 3, the solvent of the first carbazole-based polymer composition layer included in the first composite membrane evaporates, and a portion of the first carbazole-based polymer may be dried in a state of being impregnated into the porous support.

The drying in Step 3 may be performed at a temperature of 40°C to 150°C. Specifically, the drying may be performed at a temperature of 60°C to 80°C.

When the temperature is too low, it takes too long for the solvent to dry, and thus non-drying may occur before proceeding to Step 4, and there may occur a problem that the viscosity of the solution increases and the impregnation rate decreases when the carbazole-based polymer is impregnated into the porous support. On the other hand, when the temperature is too high, the carbazole-based polymer is dried before being impregnated into the porous support and thus the impregnation rate may decrease, or the support may shrink at a high temperature to generate wrinkles.

Step 4 is a step of obtaining a second composite membrane by coating a second carbazole-based polymer composition on the porous support of the first composite membrane dried at a high temperature.

The second carbazole-based polymer included in the second carbazole-based polymer composition coated in Step 4 may be the same as or different from the first carbazole-based polymer in Step 1, and may comprise a compound represented by Chemical Formula 1 below.

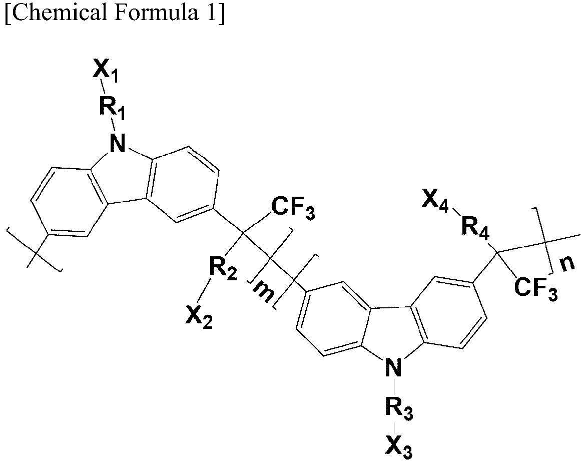

In Chemical Formula 1,
R₁ to R₄ are each independently C₁₋₆₀ alkylene; C₆₋₆₀ arylene; or C₂₋₆₀ allylene,
R₁ to R₄ may be each independently unsubstituted or substituted with one or more fluorines,
R₁ to R₄ may each independently comprise one or more heteroatoms selected from the group consisting of O, N, and S instead of carbon,
R₁ to R₄ may be the same or different for each repeating unit,
X₁ to X₄ may be each independently a hydrogen atom; or an anion exchange group,
one or more of X₁ to X₄ are an anion exchange group,
the anion exchange group is one or more selected from the group consisting of an amine group, an ammonium group, an amino group, an imine group, a sulfonium group, a phosphonium group, a pyridyl group, a carbazolyl group, an imidazolyl group, or salts thereof, and
m or n is each independently an integer of 1 to 100,000.

The second carbazole-based polymer composition coated in Step 4 may also be a solution, and a solvent is not limited as long as it is a polar solvent, but preferably may comprise a polar aprotic solvent. For example, it may comprise N-methyl-2-pyrrolidone (NMP).

In addition, as a method of coating the second carbazole-based polymer composition in Step 4, there is no limitation as long as it is a general polymer coating method, but for example, comma coating, slot-die coating, or gravure coating or the like may be used.

Specifically, the compound represented by Chemical Formula 1 may be poly(9-(6-(trimethylammonium bromide)hexyl)-9H-carbazole-co-1,1,1-trifluoroisopropane) represented by Chemical Formula 2.

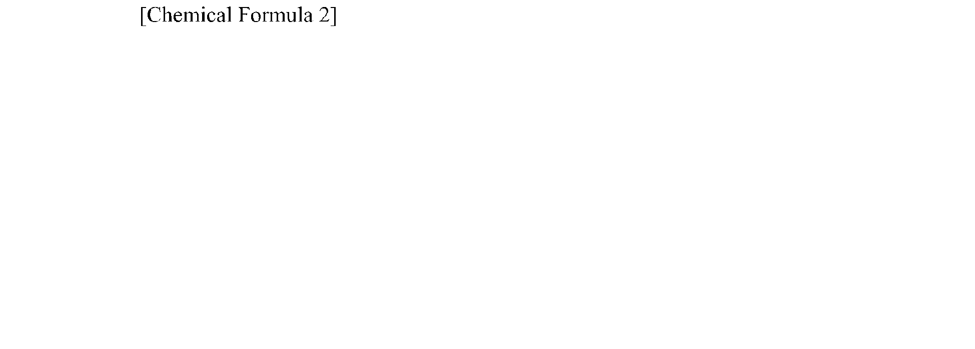

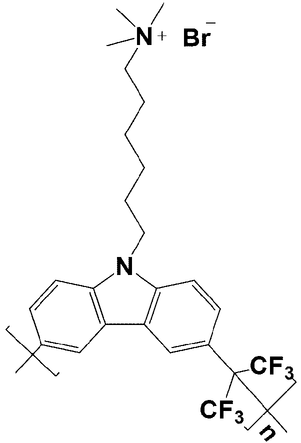

Step 5 is a step of drying the second composite membrane obtained in Step 4.

Since the second carbazole-based polymer composition coated in Step 4 is in a solution state, a process of binding to the porous support through a drying step is necessary similarly to Step 3. Accordingly, the solvent of the second carbazole-based polymer composition layer coated in Step 4 evaporates, and a portion of the carbazole-based polymer may be dried in a state of being impregnated into the porous support.

The drying in Step 5 may be performed at a temperature of 40°C to 150°C. Specifically, the drying may be performed at a temperature of 60°C to 80°C.

When the temperature is too low, undried portions remain even after the drying process, and thus there may be a problem that the undried portions stick to the release sheet when winding in a roll type, and when the temperature is too high, shrinkage of the porous support due to heat may become severe, and accordingly, a problem of generating wrinkles may occur.

Step 6 is a step of obtaining an anion exchange membrane having a structure in which a first carbazole-based polymer layer, a porous support, and a second carbazole-based polymer layer are sequentially laminated by removing the release sheet of Step 1.

In the anion exchange membrane manufactured according to the method for manufacturing an anion exchange membrane, a total thickness of the first carbazole-based polymer layer, the porous support layer, and the second carbazole-based polymer layer may be greater than 40 µm and less than 150 µm. Specifically, the total thickness of the anion exchange membrane manufactured according to the method for manufacturing an anion exchange membrane may be greater than 40 µm, 50 µm or more, 70 µm or more, or 100 µm or more, and less than 150 µm, 140 µm or less, 130 µm or less, or 120 µm or less.

In an anion water electrolysis system, a range of hydrogen content relative to oxygen amount at the anode electrode is regulated in order to prevent in advance a problem due to explosion during operation of the system. The explosion range is designed such that there is a possibility of explosion when the hydrogen content relative to oxygen amount is 4% or more, and the system is stopped when it becomes 2% or more.

Accordingly, when the total thickness of the anion exchange membrane is 40 µm or less, hydrogen gas generated at the cathode electrode moves toward the anode electrode through the anion exchange membrane, and thus there is a high possibility that the hydrogen content relative to oxygen amount exceeds 2% and the system is not operated.

On the other hand, when the total thickness of the anion exchange membrane exceeds 150 µm, the carbazole-based polymer layer is thick and characteristics of the carbazole-based polymer become dominant, and thus the manufactured anion exchange membrane may crack or break due to the cracking characteristics of the carbazole-based polymer.

Hereinafter, preferred exemplary embodiments are provided for better understanding of the present invention. However, the following exemplary embodiments are only for illustrating the present invention, and the present invention is not limited thereto.

### Comparative Example 1 - Composite Anion Exchange Membrane with Total Thickness of 40 µm

(Step 1) A first carbazole-based polymer composition with a solid content of 20 wt.% was prepared using the polymer represented by Chemical Formula 2 below as a first carbazole-based polymer and N-methyl-2-pyrrolidone (NMP) as a solvent. As a release sheet, a polyethylene naphthalate (PEN) film was prepared. The first carbazole-based polymer composition was coated on one side of the release sheet by a comma coating method. At this time, the coating amount of the first carbazole-based polymer composition was 100 µm.

The polymer represented by Chemical Formula 2 was poly(9-(6-(trimethylammonium bromide)hexyl)-9H-carbazole-co-1,1,1-trifluoroisopropane).

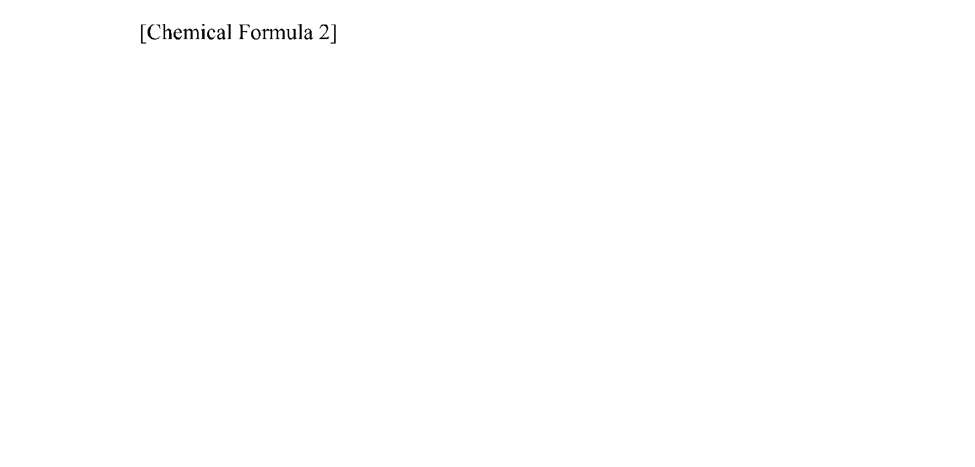

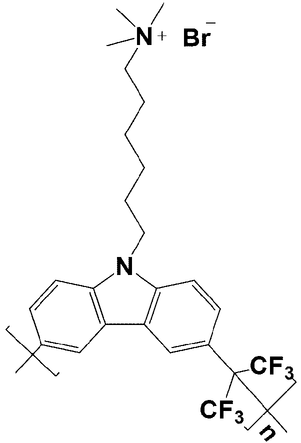

(Step 2) As a porous support, polypropylene (PP) having a thickness of 12µm was prepared and positioned on the first carbazole-based polymer composition layer to obtain a first composite membrane.

(Step 3) The first composite membrane was dried at a temperature of 60°C for 20 minutes and at 80°C for 30 minutes to evaporate the solvent of the first carbazole-based polymer composition.

(Step 4) A second composite membrane was obtained by coating a second carbazole-based polymer composition on the porous support of the dried first composite membrane. At this time, as a second carbazole-based polymer, a polymer represented by Chemical Formula 2 below was used, and as a solvent, N-Methyl-2-pyrrolidone (NMP) was used, and a solid content was 20 wt.%, and coating was performed by a comma coating method, and the coating amount was 100µm.

The polymer represented by Chemical Formula 2 was poly(9-(6-(trimethylammonium bromide)hexyl)-9H-carbazole-co-1,1,1-trifluoroisopropane).

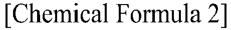

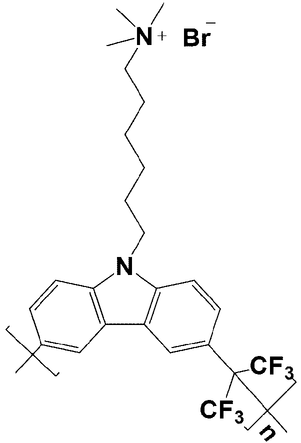

(Steps 5 to 6) The second composite membrane was dried at a temperature of 60°C for 20 minutes and at 80°C for 30 minutes, and the release sheet was removed to obtain an anion exchange membrane having a thickness of 40 µm.

### Comparative Example 2 - Single-Layer Anion Exchange Membrane with Total Thickness of 50 µm

(Step 1) A carbazole-based polymer composition with a solid content of 20 wt.% was prepared using the polymer represented by Chemical Formula 2 above as a carbazole-based polymer and N-methyl-2-pyrrolidone (NMP) as a solvent. As a release sheet, a polyethylene naphthalate (PEN) film was prepared. The carbazole-based polymer composition was coated on one side of the release sheet by a comma coating method. At this time, the coating amount of the carbazole-based polymer composition was 250µm.

(Step 2) The carbazole-based membrane was dried at a temperature of 60°C for 20 minutes and at 80°C for 30 minutes to obtain an anion exchange membrane of 50 µm.

### Example 1 - Composite Anion Exchange Membrane with Total Thickness of 70 µm

(Step 1) A first carbazole-based polymer composition with a solid content of 20 wt.% was prepared using the polymer represented by Chemical Formula 2 above as a first carbazole-based polymer and N-methyl-2-pyrrolidone (NMP) as a solvent. As a release sheet, a polyethylene naphthalate (PEN) film was prepared. The first carbazole-based polymer composition was coated on one side of the release sheet by a comma coating method. At this time, the coating amount of the first carbazole-based polymer composition was 180 µm.

(Step 2) As a porous support, polypropylene (PP) having a thickness of 12µm was prepared and positioned on the first carbazole-based polymer composition layer to obtain a first composite membrane.

(Step 3) The first composite membrane was dried at a temperature of 60°C for 20 minutes and at 80°C for 30 minutes to evaporate the solvent of the first carbazole-based polymer composition.

(Step 4) A second composite membrane was obtained by coating a second carbazole-based polymer composition on the porous support of the dried first composite membrane. At this time, as a second carbazole-based polymer, the polymer represented by Chemical Formula 2 was similarly used, as a solvent, N-Methyl-2-pyrrolidone (NMP) was used, a solid content was 20 wt.%, coating was performed by a comma coating method, and the coating amount was 180µm.

(Steps 5 to 6) The second composite membrane was dried at a temperature of 60°C for 20 minutes and at 80°C for 30 minutes, and the release sheet was removed to obtain an anion exchange membrane having a thickness of 70 µm.

### Example 2 - Composite Anion Exchange Membrane with Total Thickness of 150 µm

(Step 1) A first carbazole-based polymer composition with a solid content of 20 wt.% was prepared using the polymer represented by Chemical Formula 2 above as a first carbazole-based polymer and N-methyl-2-pyrrolidone (NMP) as a solvent. As a release sheet, a polyethylene naphthalate (PEN) film was prepared. The first carbazole-based polymer composition was coated on one side of the release sheet by a comma coating method. At this time, the coating amount of the first carbazole-based polymer composition was 380µm.

(Step 2) As a porous support, polypropylene (PP) having a thickness of 12µm was prepared and positioned on the first carbazole-based polymer composition layer to obtain a first composite membrane.

(Step 3) The first composite membrane was dried at a temperature of 60°C for 20 minutes and at 80°C for 30 minutes to evaporate the solvent of the first carbazole-based polymer composition.

(Step 4) A second composite membrane was obtained by coating a second carbazole-based polymer composition on the porous support of the dried first composite membrane. At this time, as a second carbazole-based polymer, the polymer represented by Chemical Formula 2 was similarly used, as a solvent, N-Methyl-2-pyrrolidone (NMP) was used, a solid content was 20 wt.%, coating was performed by a comma coating method, and the coating amount was 380µm.

(Steps 5 to 6) The second composite membrane was dried at a temperature of 60°C for 20 minutes and at 80°C for 30 minutes, and the release sheet was removed to obtain an anion exchange membrane having a thickness of 150 µm.

### Example 3 - Composite Anion Exchange Membrane with Total Thickness of 170 µm

(Step 1) A first carbazole-based polymer composition with a solid content of 20 wt.% was prepared using the polymer represented by Chemical Formula 2 above as a first carbazole-based polymer and N-methyl-2-pyrrolidone (NMP) as a solvent. As a release sheet, a polyethylene naphthalate (PEN) film was prepared. The first carbazole-based polymer composition was coated on one side of the release sheet by a comma coating method. At this time, the coating amount of the first carbazole-based polymer composition was 420µm.

(Step 2) As a porous support, polypropylene (PP) having a thickness of 12µm was prepared and positioned on the first carbazole-based polymer composition layer to obtain a first composite membrane.

(Step 3) The first composite membrane was dried at a temperature of 60°C for 20 minutes and at 80°C for 30 minutes to evaporate the solvent of the first carbazole-based polymer composition.

(Step 4) A second composite membrane was obtained by coating a second carbazole-based polymer composition on the porous support of the dried first composite membrane. At this time, as a second carbazole-based polymer, the polymer represented by Chemical Formula 2 was similarly used, as a solvent, N-Methyl-2-pyrrolidone (NMP) was used, a solid content was 20 wt.%, coating was performed by a comma coating method, and the coating amount was 420µm.

(Steps 5 to 6) The second composite membrane was dried at a temperature of 60°C for 20 minutes and at 80°C for 30 minutes, and the release sheet was removed to obtain an anion exchange membrane having a thickness of 170 µm.

### Example 4 - Composite Anion Exchange Membrane with Total Thickness of 60 µm

(Step 1) A first carbazole-based polymer composition with a solid content of 20 wt.% was prepared using the polymer represented by Chemical Formula 2 above as a first carbazole-based polymer and N-methyl-2-pyrrolidone (NMP) as a solvent. As a release sheet, a polyethylene naphthalate (PEN) film was prepared. The first carbazole-based polymer composition was coated on one side of the release sheet by a comma coating method. At this time, the coating amount of the first carbazole-based polymer composition was 150µm.

(Step 2) As a porous support, polypropylene (PP) having a thickness of 12µm was prepared and positioned on the first carbazole-based polymer composition layer to obtain a first composite membrane.

(Step 3) The first composite membrane was dried at a temperature of 60°C for 20 minutes and at 80°C for 30 minutes to evaporate the solvent of the first carbazole-based polymer composition.

(Step 4) A second composite membrane was obtained by coating a second carbazole-based polymer composition on the porous support of the dried first composite membrane. At this time, as a second carbazole-based polymer, the polymer represented by Chemical Formula 2 was similarly used, as a solvent, N-Methyl-2-pyrrolidone (NMP) was used, a solid content was 20 wt.%, coating was performed by a comma coating method, and the coating amount was 150µm.

(Steps 5 to 6) The second composite membrane was dried at a temperature of 60°C for 20 minutes and at 80°C for 30 minutes, and the release sheet was removed to obtain an anion exchange membrane having a thickness of 60 µm.

### Example 5 - Composite Anion Exchange Membrane with Total Thickness of 80 µm

(Step 1) A first carbazole-based polymer composition with a solid content of 20 wt.% was prepared using the polymer represented by Chemical Formula 2 above as a first carbazole-based polymer and N-methyl-2-pyrrolidone (NMP) as a solvent. As a release sheet, a polyethylene naphthalate (PEN) film was prepared. The first carbazole-based polymer composition was coated on one side of the release sheet by a comma coating method. At this time, the coating amount of the first carbazole-based polymer composition was 200µm.

(Step 2) As a porous support, polypropylene (PP) having a thickness of 12µm was prepared and positioned on the first carbazole-based polymer composition layer to obtain a first composite membrane.

(Step 3) The first composite membrane was dried at a temperature of 60°C for 20 minutes and at 80°C for 30 minutes to evaporate the solvent of the first carbazole-based polymer composition.

(Step 4) A second composite membrane was obtained by coating a second carbazole-based polymer composition on the porous support of the dried first composite membrane. At this time, as a second carbazole-based polymer, the polymer represented by Chemical Formula 2 was similarly used, as a solvent, N-Methyl-2-pyrrolidone (NMP) was used, a solid content was 20 wt.%, coating was performed by a comma coating method, and the coating amount was 200µm.

(Steps 5 to 6) The second composite membrane was dried at a temperature of 60°C for 20 minutes and at 80°C for 30 minutes, and the release sheet was removed to obtain an anion exchange membrane having a thickness of 80 µm.

### Experimental Example 1 - Hydrogen Permeability Evaluation

Hydrogen content relative to oxygen amount at the anode electrode was measured using the anion exchange membranes manufactured in Comparative Example 1 and Examples 4 and 5, and are shown in the table below.

**[Table 1]**

| Classification | Reinforced membrane thickness (µm) | Hydrogen content relative to oxygen amount (%) |
|---|---|---|
| Comparative Example 1 | 40 | 2.0 |
| Example 4 | 60 | 1.7 |
| Example 5 | 80 | 1.4 |

Hydrogen gas generated at the cathode moves to the anode electrode through the reinforced membrane, and as the thickness of the reinforced membrane increases, the amount of hydrogen movement decreases.

When the hydrogen content relative to oxygen amount is 4% or more, there is a possibility of explosion, and when the hydrogen content relative to oxygen amount is 2% or more according to safety regulations, the system was designed to stop That is, the hydrogen content relative to oxygen amount at the anode must be less than 2%.

In this Experimental Example, the hydrogen content relative to oxygen amount at the anode electrode was measured during operation of the anion exchange membrane water electrolysis system and was measured at 1.5 A/cm² under atmospheric pressure. The hydrogen content measurement was performed with Gas Chromatography (GC) from Agilent. When the thickness of the reinforced film was 40 µm, the hydrogen content relative to the oxygen amount was 2.0%, and when the thickness of the reinforced film was 60 µm, the hydrogen content relative to the oxygen amount was 1.7%; and when the thickness of the reinforced film was 80 µm, the hydrogen content relative to the oxygen amount was 1.4%.

### Experimental Example 2 - SEM Observation

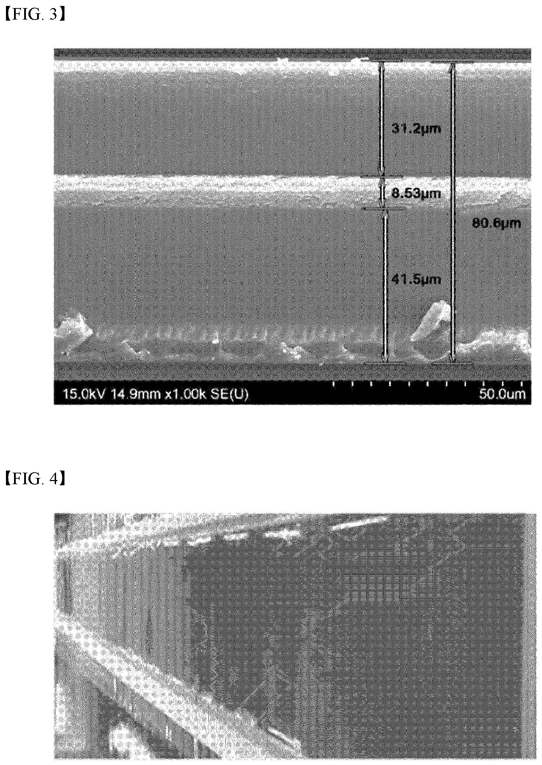

Cross-sections of the anion exchange membranes manufactured in Comparative Example 2 and Example 5 were observed by SEM and are shown in FIG. 3 and FIG. 4, respectively.

### Experimental Example 3 - Observation of Cracking

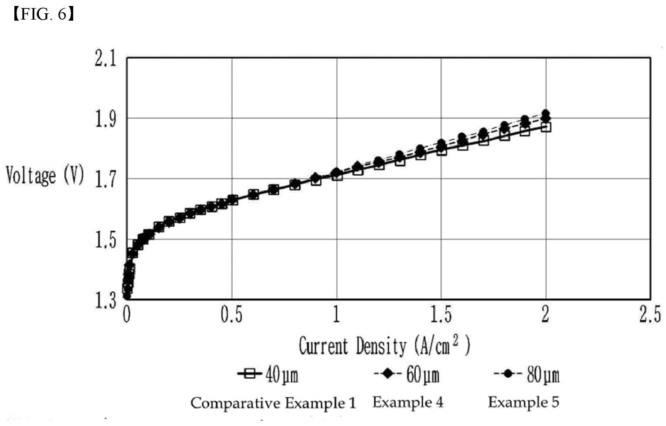

Whether cracking occurred was confirmed by physically folding the anion exchange membranes manufactured in Examples 2 and 3 and Comparative Example 2, and are shown in FIG. 6.

Regarding brittleness, a reinforced membrane was cut into 10 mm X 50 mm, corners of a short portion were held and bent, and then the bent center portion was completely pressed to confirm whether cracking occurred.

Comparative Example 2 is a single-layer anion exchange membrane and is not a composite membrane having a reinforced layer in the center, and thus it was confirmed that the exchange membrane was completely cut and cracked when confirming whether cracking occurred. In Example 2, it was confirmed that it was folded without cracking even when completely bent and the center was pressed, and in Example 3, it was confirmed that some cracking occurred but it was not completely cracked and separated.

### Experimental Example 4 - Confirmation of Water Electrolysis Performance

Water electrolysis performance evaluation was performed for Comparative Example 1 and Examples 4 and 5. Performance evaluation was performed at a cell temperature of 60°C and was evaluated with a 1 mol KOH solution.

As a result of comparing Comparative Example 1 with Examples 4 and 5, in the case of Examples in which a porous support layer was added, the total thickness increased and thus Voltage was slightly higher at the same hydrogen production amount than Comparative Example, but it appeared as a slight difference.

Therefore, it was confirmed that including a porous support layer improves cracking-related properties without degrading water electrolysis performance.

### [Explanation of Symbols]

| | | | |
|---|---|---|---|
| 100: | anion exchange membrane | 1: | first carbazole-based polymer layer |
| 2: | porous support layer | 3: | second carbazole-based polymer layer |

## Claims

1. An anion exchange membrane comprising a first carbazole-based polymer layer; a porous support layer; and a second carbazole-based polymer layer,
wherein the porous support layer is provided between the first carbazole-based polymer layer and the second carbazole-based polymer layer, and
a total thickness of the first carbazole-based polymer layer, the porous support layer, and the second carbazole-based polymer layer is greater than 40 µm and 170 µm or less.

2. The anion exchange membrane according to claim 1,
wherein the porous support comprises one or more selected from the group consisting of polypropylene (PP), polyethylene (PE), and polytetrafluoroethylene (PTFE).

3. The anion exchange membrane according to claim 1,
wherein the first carbazole-based polymer and the second carbazole-based polymer each independently comprise a compound represented by Chemical Formula 1 below: 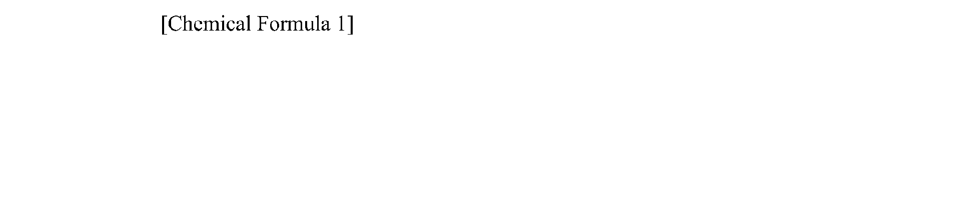 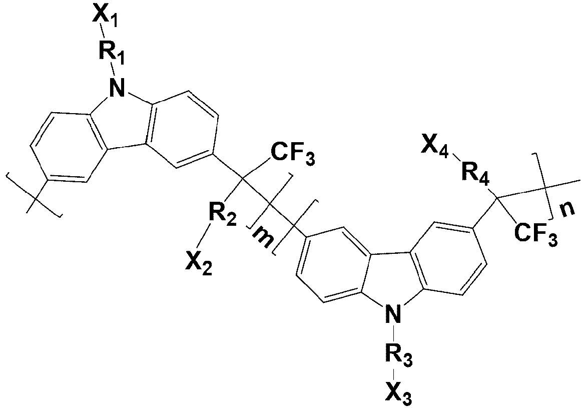 In Chemical Formula 1,
R₁ to R₄ are each independently C₁₋₆₀ alkylene; C₆₋₆₀ arylene; or C₂₋₆₀ allylene,
R₁ to R₄ may be each independently unsubstituted or substituted with one or more fluorines,
R₁ to R₄ may each independently comprise one or more heteroatoms selected from the group consisting of O, N, and S instead of carbon,
R₁ to R₄ may be the same or different for each repeating unit,
X₁ to X₄ may be each independently a hydrogen atom; or an anion exchange group,
one or more of X₁ to X₄ are an anion exchange group,
the anion exchange group is one or more selected from the group consisting of an amine group, an ammonium group, an amino group, an imine group, a sulfonium group, a phosphonium group, a pyridyl group, a carbazolyl group, an imidazolyl group, or salts thereof, and
m or n is each independently an integer of 1 to 100,000.

4. The anion exchange membrane according to claim 1,
wherein the first carbazole-based polymer layer has a thickness of 5µm to 73µm.

5. The anion exchange membrane according to claim 1,
wherein the second carbazole-based polymer layer has a thickness of 5µm to 73µm.

6. The anion exchange membrane according to claim 1,
wherein the porous support layer has a thickness of 5µm to 50µm.

7. A method for manufacturing an anion exchange membrane, comprising:
coating a first carbazole-based polymer composition onto a release sheet (Step 1)
placing a porous support on the layer of the first carbazole-based polymer composition to obtain a first composite membrane (Step 2);
drying the first composite membrane (Step 3);
coating a second carbazole-based polymer composition onto the porous support of the dried first composite membrane to obtain a second composite membrane (Step 4);
drying the second composite membrane (Step 5); and
removing the release sheet (Step 6).

8. The method for manufacturing an anion exchange membrane according to claim 7,
wherein Step 3 is performed at a temperature of 40°C to 150°C.

9. The method for manufacturing an anion exchange membrane according to claim 7,
wherein in the anion exchange membrane, a total thickness of the first carbazole-based polymer layer, the porous support layer, and the second carbazole-based polymer layer is greater than 40 µm and 170 µm or less.

10. The method for manufacturing an anion exchange membrane according to claim 7,
wherein the porous support comprises one or more selected from the group consisting of polypropylene (PP), polyethylene (PE), and polytetrafluoroethylene (PTFE).

11. The method for manufacturing an anion exchange membrane according to claim 7,
wherein the first carbazole-based polymer composition and the second carbazole-based polymer composition each independently comprise a compound represented by Chemical Formula 1 below: 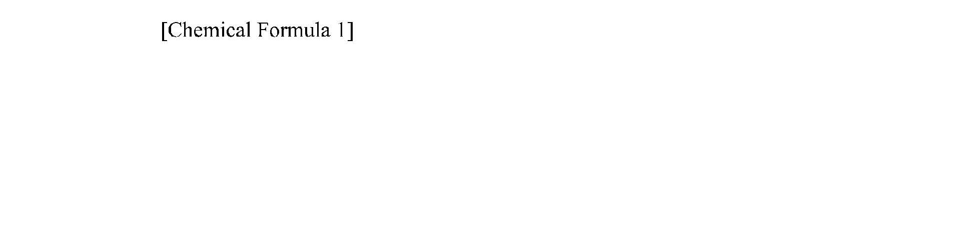 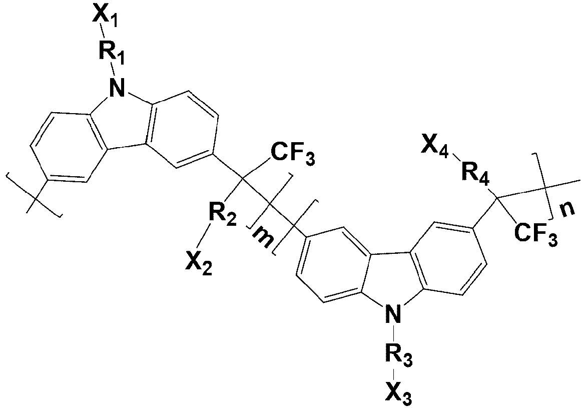 In Chemical Formula 1,
R₁ to R₄ are each independently C₁₋₆₀ alkylene; C₆₋₆₀ arylene; or C₂₋₆₀ allylene,
R₁ to R₄ may be each independently unsubstituted or substituted with one or more fluorines,
R₁ to R₄ may each independently comprise one or more heteroatoms selected from the group consisting of O, N, and S instead of carbon,
R₁ to R₄ may be the same or different for each repeating unit,
X₁ to X₄ may be each independently a hydrogen atom; or an anion exchange group,
one or more of X₁ to X₄ are an anion exchange group,
the anion exchange group is one or more selected from the group consisting of an amine group, an ammonium group, an amino group, an imine group, a sulfonium group, a phosphonium group, a pyridyl group, a carbazolyl group, an imidazolyl group, or salts thereof, and
m or n is each independently an integer of 1 to 100,000.

12. A membrane electrode assembly for fuel cells comprising the anion exchange membrane according to any one of claims 1 to 6.

13. A membrane-electrode assembly for water electrolysis comprising the anion exchange membrane according to any one of claims 1 to 6.
